# EUROPEAN PATENT SPECIFICATION

(11) **EP 3 687 153 B1**
(45) Date of publication and mention of the grant of the patent: **03.07.2024**
(21) Application number: 18932972.5
(22) Date of filing: 29.11.2018
(51) Int. Cl.: H04N 23/00

(54) **CAMERA MODULE AND ASSEMBLY PROCESS THEREFOR**
KAMERAMODUL UND ZUGEHÖRIGES MONTAGEVERFAHREN
MODULE DE CAMÉRA ET SON PROCÉDÉ D'ASSEMBLAGE

(30) Priority: 17.10.2018 CN 201811209465
(43) Date of publication of application: 29.07.2020
(73) Proprietor: Zhejiang Sunny Smartlead Technologies Co., Ltd., Yuyao, Zheijiang 315400 (CN)
(72) Inventor: ZHANG, Baozhong, Ningbo, Zhejiang 315400 (CN); GU, Yiwu, Ningbo, Zhejiang 315400 (CN); HU, Yue, Ningbo, Zhejiang 315400 (CN); NONG, Kaixun, Ningbo, Zhejiang 315400 (CN); LIU, Gaofeng, Ningbo, Zhejiang 315400 (CN)
(74) Representative: Lermer, Christoph
(86) International application number: PCT/CN2018/118110
(87) International publication number: WO 2020/077750

(56) References cited:
- CN-A- 102 749 790
- CN-A- 106 331 455
- CN-A- 106 817 515
- CN-A- 108 668 066
- CN-U- 201 947 361
- CN-Y- 201 340 473
- US-A1- 2015 124 098
- US-A1- 2015 358 538
- US-A1- 2018 084 161
- US-B1- 9 647 366

## Description

### CROSS-REFERENCE TO RELATED APPLICATIONS

The present application claims priority to Chinese patent application No. 201811209465.2, titled "Camera Module and Assembly Process", filed on October 17, 2018 with the Chinese Patent Office.

### FIELD OF THE INVENTION

The present disclosure relates to a camera module having a connection between an optical lens and a circuit board, and an assembly process of the camera module.

### BACKGROUND

In the related art, a lens and a circuit board are assembled mainly in the following kinds of ways: 1: the lens and a lens holder are fixed to the circuit board (circuit board assembly) by glue; 2: for a non-threaded split type lens, a lens flange and the lens holder are generally fixed by glue, and the lens holder is then fixed to the circuit board by thread or glue; and 3: for a threaded lens, the lens and the lens holder are generally fixed after the thread is filled with glue, and the lens holder and the circuit board are locked by thread or fixed by glue. However, in practical use, using glue to fix the circuit board to the lens has the following defects:
1. The shrinkage and expansion of glue will change under the influence of factors such as glue amount, glue thickness, material, temperature and humidity; especially for a camera module with high pixel requirements, the thickness of glue is more sensitive to the influence of the resolution of the camera module. Since the mechanical back focuses of individual lens are not completely the same, even if the back focus of each lens is known during production, it is also necessary for the glue to perform proper defocus compensation under the conditions of shrinkage at different thicknesses and glue amounts, which is more difficult to achieve.
2. During the actual production, using glue to fixedly connect the circuit board to the lens is easy to cause the occurrence of degumming phenomenon, and it is difficult to rework, which will affect the product yield and production efficiency.
3. Using glue to fixedly connect the circuit board to the lens requires that the glue be baked and completely cured. However, the baking and cooling time is relatively long, which results in low production efficiency; moreover, it is difficult to control the baking effect, and the problem of glue failure is prone to occurrence.

Document US 2018/084161 A1 discloses a camera including a lens part in which a lens is installed, a housing coupled to the lens part, and a substrate electrically coupled to the lens part., wherein the housing includes a metal compound. A heating-element groove is formed over one or more surfaces of the housing. A heating element is disposed in the heating-element groove. The substrate includes a coupling part coupled with the heating element.

### SUMMARY OF THE INVENTION

An object of the present disclosure is to provide a camera module and an assembly process that are capable of improving imaging quality.

In order to achieve the above object, the present disclosure provides a camera module according to claim 1, and an assembly process of the camera module according to claim 8.

According to an aspect of the present disclosure, a connector mounting hole is disposed in the lens, and the connector is mounted in the connector mounting hole.

According to an aspect of the present disclosure, the body portion and the connection pins are of an integrally formed configuration.

According to an aspect of the present disclosure, the connection pins are detachably connected to the body portion.

According to an aspect of the present disclosure, a material of the connector is carbon steel.

According to an aspect of the present disclosure, the circuit board is provided with an image sensor and electronic components.

According to an aspect of the present disclosure, the lens is an integrated lens.

The present disclosure also provides an assembly process of the camera module as described above, which includes: a. mounting connection pins to the body portion to form a connector and then connecting the connector with the lens, or directly connecting a connector with the lens; b. focus-adjusting the lens and the image sensor on the circuit board; and c. fixing the connector to the circuit board by welding using a solder.

According to an aspect of the present disclosure, prior to the step c, the connection pins and the circuit board need to be plated.

According to the solution of the present disclosure, the connector is provided between the lens and the circuit board, so that the camera module of the present disclosure can be more conveniently assembled. The connection between the lens and the circuit board is achieved by welding the connector to the circuit board, which effectively avoids the defects caused by the connection between the lens and the circuit board implemented by glue in the related art, and is advantageous for ensuring an imaging quality of the camera module.

According to the solution of the present disclosure, the circuit board includes a thin plate and a steel sheet reinforced plate. By providing the steel sheet reinforced plate, on one hand, a structural strength of the circuit board can be enhanced; and on the other hand, the steel sheet reinforced plate has the advantage of rapid heat dissipation, which can quickly take away the heat generated when a photosensitive chip works and ensure the uniform heat of the overall circuit board so that a deformation amount of the circuit board can be effectively controlled, thereby greatly improving the imaging quality of the camera module in a working state.

According to the solution of the present disclosure, a thermal coefficient of the steel sheet reinforced plate is greater than a thermal coefficient of the connector. In addition, in this embodiment, the connector is made of carbon steel. With such an arrangement, during the welding process, heat conduction toward the lens along the connector is slower, and heat conduction toward the steel sheet reinforced plate is faster, so that the heat generated in the working state of the circuit board is dissipated from the steel sheet reinforced plate, and the rise in the temperature of the circuit board will not affect a temperature drift variation of the lens, so that the stability of the resolution is improved under a working condition of -40°C to 85°C, which is advantageous for ensuing the stability of the imaging quality so that the camera module of the present disclosure can be used under harsher environmental conditions for a wider range of applications.

### BRIEF DESCRIPTION OF THE DRAWINGS

FIG. 1 is a structural view schematically showing a camera module according to an embodiment of the present disclosure;
FIG. 2 is a structural view schematically showing a camera module according to a second embodiment of the present disclosure;
FIG. 3 is a structural view schematically showing a circuit board according to the present disclosure;
FIG. 4 is a structural view schematically showing a connector according to an embodiment in FIG. 2;
FIG. 5 is a structural view schematically showing a connector according to a second embodiment in FIG. 2; and
FIG. 6 is an exploded view schematically showing a camera module according to the present disclosure.

### Meanings of the symbols in the drawings are explained as follows:

1. lens; 2. circuit board; 3. connector; 4. solder; 21. thin plate; 22. steel sheet reinforced plate; 23. photosensitive chip; 24. electronic components; 25. flexible connection strip; 31. body portion; 32. connection pin.

### DETAILED DESCRIPTION OF THE INVENTION

In order to more clearly illustrate the embodiments of the present disclosure or the technical solutions in the related art, drawings required to be used in the embodiments will be briefly described below. Obviously, the drawings in the following description show only some of the embodiments of the present disclosure, and those skilled in the art can obtain other drawings based on these drawings without creative efforts.

When describing the embodiments of the present disclosure, the orientations or positional relationships described by the terms "longitudinal", "transverse", "upper", "lower", "front", "rear", "left", "right", "vertical", "horizontal", "top", "bottom", "inner" and "outer" are based on the orientations or positional relationships shown in the related drawings. These terms are merely used for the sake of facilitating describing the present disclosure and simplifying the description, and do not indicate or imply that the device or element as referred to must have a particular orientation, or must be constructed or operated in a particular orientation. Therefore, the above terms should not be construed as limiting the scope of the present disclosure.

The present disclosure will be described in detail below with reference to the drawings and specific embodiments. It is impossible to describe all the embodiments exhaustively herein, but the embodiments of the present disclosure are not limited to those described below.

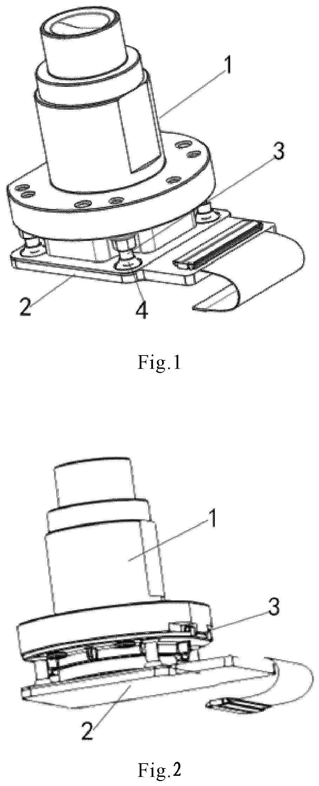

The camera module of the present disclosure includes a lens 1, a circuit board 2, and a connector 3. As shown in FIGS. 1 and 2, in an embodiment of the present disclosure, the lens 1 includes a lens barrel portion and a flange portion, and the flange portion is located on a lower side of the lens barrel portion and is connected to the lens barrel portion. In this embodiment, the lens barrel portion of the lens 1 is made of a metal material; for example, a material such as copper or aluminum may be used. This design solves the problem of poor consistency of the heat compensation amount caused by different thermal expansion coefficients when the split lens holder and lens are connected by thread and glue or by thread alone.

In the present disclosure, the flange portion of the lens 1 is connected to the connector 3. As shown in FIG. 1, according to an embodiment of the present disclosure, the connector 3 is disposed between the lens 1 and the circuit board 2. A connector mounting hole is disposed in the lens 1, the connector 3 is mounted in the connector mounting hole, and the other end of the connector 3 is welded to the circuit board 2.

As shown in FIGS. 2, 5 and 6, according to a second embodiment of the present disclosure, the connector 3 includes a body portion 31 and connection pins 32. The connection pins 32 are disposed on a side of the body portion 31 near the circuit board 2. The body portion 31 is detachably connected to the lens 1, and the connection pins 32 and the circuit board 2 are fixed by welding.

In the camera module of the present disclosure, the connector 3 is disposed between the lens 1 and the circuit board 2 so that the camera module of the present disclosure can be assembled more conveniently. The connection between the lens 1 and the circuit board 2 is achieved by welding the connector 3 and the circuit board 2, which effectively avoids the defects caused by the connection between the lens and the circuit board implemented by glue in the related art, which is advantageous for ensuring the imaging quality of the camera module.

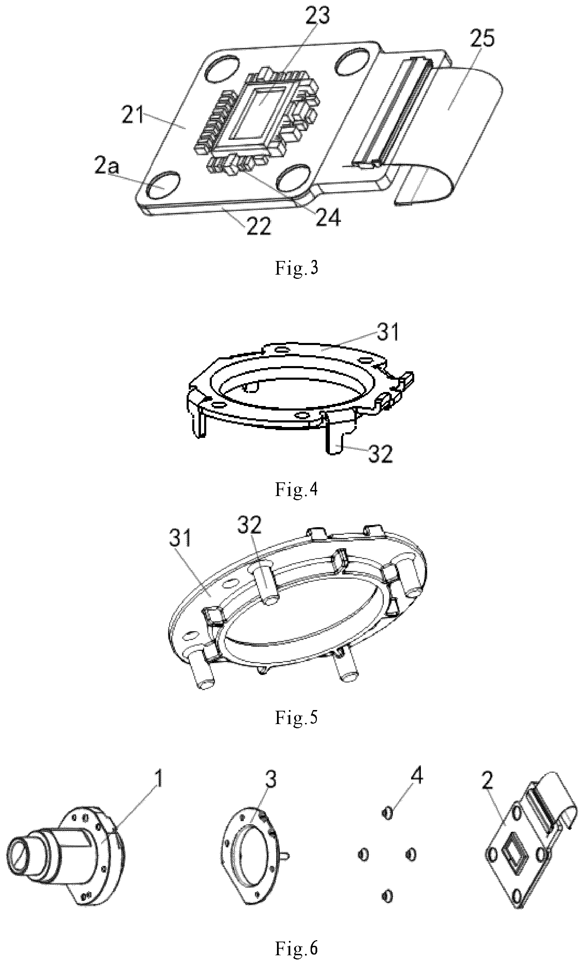

As shown in FIG. 3, the circuit board 2 of the present disclosure includes a thin plate 21 and a steel sheet reinforced plate 22. In this embodiment, the thin plate 21 is located on an upper side, and the steel sheet reinforced plate 22 is located on a lower side of the thin plate 21 and fitted and fixed to the thin plate 21. In the present disclosure, the thin plate 21 of the circuit board 2 is provided with an image sensor, a photosensitive chip 23, electronic components 24, and a flexible connection strip 25. The circuit board 2 of the present disclosure is further provided with pads 2a for carrying welding spots. The connector 3 and the circuit board 2 of the present disclosure are fixedly connected by welding. Specifically, the connection pins 32 are welded and fixed to the pads 2a on the circuit board 2 through a solder 4.

According to an embodiment of the present disclosure, the pads 2a may be directly disposed on the thin plate 21. According to a second embodiment of the present disclosure, through holes may be provided in the thin plate 21 of the circuit board 2, and the pads 2a are disposed in the through holes and fixed with the steel sheet reinforced plate 22. That is, the pads 2a may be disposed on the steel sheet reinforced plate 22. Both of the above ways can realize the welding of the connector 3 or the connection pins 32 to the pads 2a.

The circuit board 2 of the present disclosure includes a thin plate 21 and a steel sheet reinforced plate 22. By providing the steel sheet reinforced plate 22, on one hand, a structural strength of the circuit board 2 can be enhanced; and on the other hand, the steel sheet reinforced plate 22 has the advantage of rapid heat dissipation, which can quickly take away the heat generated when the photosensitive chip 23 works and ensure the uniform heat of the overall circuit board 2 so that a deformation amount of the circuit board 2 can be effectively controlled, thereby greatly improving the imaging quality of the camera module in a working state.

In the present disclosure, a thermal coefficient of the steel sheet reinforced plate 22 is greater than a thermal coefficient of the connection pins 32. In addition, in this embodiment, the connector 3 is made of carbon steel. With such an arrangement, during the welding process, heat conduction toward the lens 2 along the connector 3 is slower, and heat conduction toward the steel sheet reinforced plate 22 is faster, so that the heat generated in the working state of the circuit board 2 is dissipated from the steel sheet reinforced plate 22, and the rise in the temperature of the circuit board 2 will not affect a temperature drift variation of the lens, so that the stability of the resolution is improved under a working condition of -40°C to 85°C, which is advantageous for ensuing the stability of the imaging quality so that the camera module of the present disclosure can be used under harsher environmental conditions for a wider range of applications.

As shown in FIG. 4, according to the first embodiment of the present disclosure, the connector 3 is of an integrally formed configuration, that is, the body portion 31 and the connection pins 32 of the connector 3 are integrally formed. For example, the connector 3 of the present disclosure may be manufactured by die-casting.

As shown in FIG. 5, in the second embodiment of the present disclosure, the body portion 31 and the connection pins 32 of the connector 3 are detachably connected, that is, the connection pins 32, as a separate assembly, need to be assembled to the body portion 31 first. In this embodiment, threaded holes are provided in the body portion 31, and the connection pins 32 are mounted in the threaded holes of the body portion 31.

As shown in FIG. 6, the present disclosure also provides an assembly process of the camera module, which includes: a. mounting connection pins to the body portion to form a connector and then connecting the connector with the lens, or directly connecting a connector with the lens; b. focus-adjusting the lens 1 and the image sensor on the circuit board 2; and c. fixing the connector 3 to the circuit board 2 by welding using the solder 4.

Specifically, first, the lens 1, the connector 3 and the circuit board 2 that have passed the inspection are selected. If the selected connector 3 is a separate assembly, the connector 3 is connected to the flange portion of the lens 1. If the selected connector 3 is not a separate assembly, the connection pins 32 are mounted to the body portion 31 of the connector 3 (if an integrally formed connector 3 is used, it is not necessary to separately mount the connection pins 32). After that, an automatic spot-soldering machine applies the solder 4 (which may be solder paste, solder ball, solder wire, etc.) at the pads 2a of the circuit board 2. Subsequently, a relative position of the lens 1 to the circuit board 2 is adjusted, the lens 1 and the image sensor on the circuit board 2 are focus-adjusted, and the optical center, optical axis, and resolution are adjusted. After completion, the welding machine equipment is automatically turned on, and the solder 4 at the pads 2a is heated and melted to achieve fixing. After cooling, the optical performance of the camera is tested. A test completion status is shown on an LED display, and the assembling of the lens 1 and the circuit board 2 is completed. Then, other components may be assembled.

According to the second embodiment of the present disclosure, first, the lens 1, the connector 3 and the circuit board 2 that have passed the inspection are selected. If the selected connector 3 is a separate assembly, the connector 3 is connected to the flange portion of the lens 1. If the selected connector 3 is not a separate assembly, the connection pins 32 are mounted to the body portion 31 of the connector 3 (if an integrally formed connector 3 is used, it is not necessary to separately mount the connection pins 32). Subsequently, a relative position of the lens 1 to the circuit board 2 is adjusted, the lens 1 and the image sensor on the circuit board 2 are focus-adjusted, and the optical center, optical axis, and resolution are adjusted. After the adjustment is completed, a solder feeding equipment applies solder wire or solder ball near gaps between the pads 2a and the connector 3, and the solder 4 is melted by the welding equipment and then drops into the gaps between the pads 2a and the connector 3. After cooling, the optical performance of the camera is tested. A test completion status is shown on an LED display, and the assembling of the lens 1 and the circuit board 2 is completed. Then, other components may be assembled.

In both the above two ways, the connector 3 and the circuit board 22 (pads 2a) need to be plated before welding, which is advantageous for ensuring the firmness of the welding. Welding the connector 3 and the pads 2a according to the above-mentioned two ways is advantageous for ensuring the focusing accuracy of the camera module of the present disclosure, thereby improving the imaging quality.

The above content is only an example of the specific solution of the present disclosure. For the devices and structures that are not described in detail, it should be understood that the general devices and general methods existing in the art are used to implement the present disclosure.

The above described is only one embodiment of the present disclosure, and is not intended to limit the present disclosure. For those skilled in the art, various modifications and changes can be made to the present disclosure.

## Claims

1. A camera module, comprising a lens (1) and a circuit board (2), wherein the camera module further comprises a connector (3), the connector (3) being located between the lens (1) and the circuit board (2) provided with pads (2a), the connector (3) comprises a body portion (31) and connection pins (32) connected to the body portion (31), the body portion (31) being detachably connected to the lens (1),
**characterized in that**
the connection pins (32) are welded to the pads (2a) on circuit board (2),
wherein the circuit board (2) comprises a thin plate (21), and a steel sheet reinforced plate (22) located on a lower side of the thin plate (21) and fitted and fixed to the thin plate (21), a thermal coefficient of the steel sheet reinforced plate (22) is greater than a thermal coefficient of the connection pins (32).

2. The camera module according to claim 1, wherein a connector mounting hole is disposed in the lens (1), and the connector (3) is mounted in the connector mounting hole.

3. The camera module according to claim 1, wherein the body portion (31) and the connection pins (32) are of an integrally formed configuration.

4. The camera module according to claim 1, wherein the connection pins (32) are detachably connected to the body portion (31).

5. The camera module according to claim 1, wherein a material of the connector (3) is carbon steel.

6. The camera module according to claim 1, wherein, the circuit board (2) is provided with an image sensor and electronic components

7. The camera module according to claim 1, wherein the lens (1) is an integrated lens.

8. An assembly process of the camera module according to claims 1 to 7, comprising:
a. mounting connection pins to the body portion to form a connector and then connecting the connector with the lens, or directly connecting a connector with the lens;
b. focus-adjusting the lens and the image sensor on the circuit board; and
c. fixing the connector to the circuit board by welding using a solder.

9. The assembly process according to claim 8, wherein prior to the step c, the connection pins and the circuit board need to be plated.

## Patentansprüche

1. Kameramodul, umfassend ein Objektiv (1) und eine Leiterplatte (2), wobei das Kameramodul ferner einen Verbinder (3) umfasst, wobei der Verbinder (3) zwischen dem Objektiv (1) und der Leiterplatte (2), die mit Kontaktflächen (2a) versehen ist, angeordnet ist, wobei der Verbinder (3) einen Körperabschnitt (31) und Verbindungsstifte (32), die mit dem Körperabschnitt (31) verbunden sind, umfasst, wobei der Körperabschnitt (31) lösbar mit dem Objektiv (1) verbunden ist,
**dadurch gekennzeichnet, dass**
die Verbindungsstifte (32) mit den Kontaktflächen (2a) auf der Leiterplatte (2) verschweißt sind,
wobei die Leiterplatte (2) eine dünne Platte (21) und eine stahlblechverstärkte Platte (22) umfasst, die sich auf einer unteren Seite der dünnen Platte (21) befindet und an die dünne Platte (21) angebaut und daran befestigt ist, wobei ein Wärmekoeffizient der stahlblechverstärkten Platte (22) größer ist als ein Wärmekoeffizient der Verbindungsstifte (32).

2. Kameramodul nach Anspruch 1, wobei in dem Objektiv (1) eine Montageöffnung für den Verbinder angeordnet ist und der Verbinder (3) in der Montageöffnung für den Verbinder montiert ist.

3. Kameramodul nach Anspruch 1, wobei der Körperabschnitt (31) und die Verbindungsstifte (32) eine einstückig ausgebildete Konfiguration aufweisen.

4. Kameramodul nach Anspruch 1, wobei die Verbindungsstifte (32) lösbar mit dem Körperabschnitt verbunden sind.

5. Das Kameramodul nach Anspruch 1, wobei ein Material des Verbinders (3) Kohlenstoffstahl ist.

6. Kameramodul nach Anspruch 1, wobei die Leiterplatte (2) mit einem Bildsensor und elektronischen Komponenten versehen ist.

7. Kameramodul nach Anspruch 1, wobei das Objektiv (1) ein integriertes Objektiv ist.

8. Montageverfahren zum Zusammenbau des Kameramoduls nach einem der Ansprüche 1 bis 7, umfassend:
a. Anbringen von Verbindungsstiften an dem Gehäuseteil, um einen Verbinder zu bilden, und anschließendes Verbinden des Verbinders mit dem Objektiv oder direktes Verbinden eines Verbinders mit dem Objektiv;
b. Fokussieren des Objektivs und des Bildsensors auf der Leiterplatte; und
c. Befestigen des Verbinders an der Leiterplatte durch Schweißen mit einem Lot.

9. Montageverfahren nach Anspruch 8, wobei vor dem Schritt c die Verbindungsstifte und die Leiterplatte plattiert werden müssen.

## Revendications

1. Module de caméra, comprenant un objectif (1) et une carte de circuit imprimé (2), dans lequel le module de caméra comprenant en outre un connecteur (3), le connecteur (3) étant situé entre l'objectif (1) et la carte de circuit imprimé (2) qui comporte des surfaces de contact (2a), le connecteur (3) comprend une partie de corps (31) et des broches de connexion (32) connectées à la partie de corps (31), la partie de corps (31) étant connectée de manière amovible à l'objectif (1),
**caractérisé par le fait que**
les broches de connexion (32) sont soudées aux surfaces de contact (2a) de la carte de circuit imprimé (2),
dans laquelle la carte de circuit imprimé (2) comprend une plaque mince (21) et une plaque renforcée par une feuille d'acier (22) située sur un côté inférieur de la plaque mince (21) et ajustée et fixée à la plaque mince (21), un coefficient thermique de_ la plaque renforcée par une feuille d'acier (22) est supérieur à un coefficient thermique des broches de connexion (32).

2. Module de caméra selon la revendication 1, dans lequel un trou de montage de connecteur est disposé dans la lentille (1), et le connecteur (3) est monté dans le trou de montage de connecteur.

3. Module de caméra selon la revendication 1, dans lequel la partie du corps (31) et les broches de connexion (32) sont de configuration intégrale.

4. Module de caméra selon la revendication 1, dans lequel les broches de connexion (32) sont connectées de manière amovible à la partie du corps (31).

5. Module de caméra selon la revendication 1, dans lequel le matériau du connecteur (3) est de l'acier au carbone.

6. Module de caméra selon la revendication 1, dans lequel la carte de circuit imprimé (2) est pourvue d'un capteur d'image et de composants électroniques.

7. Module de caméra selon la revendication 1, dans lequel l'objectif (1) est un objectif intégré.

8. Processus d'assemblage du module de caméra selon les revendications 1 à 7, comprenant:
a. le montage de broches de connexion sur la partie du corps pour former un connecteur, puis la connexion du connecteur avec l'objectif, ou la connexion directe d'un connecteur avec l'obj ectif;
b. le réglage de la mise au point de l'objectif et du capteur d'image sur la carte de circuit imprimé; et
c. en fixant le connecteur à la carte de circuit imprimé par soudage à l'aide d'une brasure.

9. Procédé d'assemblage selon la revendication 8, dans lequel, avant l'étape c, les broches de connexion et la carte de circuit imprimé doivent être plaquées.
